# EUROPÄISCHE PATENTSCHRIFT

(11) **EP 4 387 438 B1**
(45) Veröffentlichungstag und Bekanntmachung des Hinweises auf die Patenterteilung: **01.10.2025**
(21) Anmeldenummer: 22764398.8
(22) Anmeldetag: 09.08.2022
(51) Int. Cl.: A01K 27/00

(54) **LEINENVORRICHTUNG MIT AUFROLLMECHANISMUS**
LEASH DEVICE WITH REEL MECHANISM
DISPOSITIF DE LAISSE AVEC ENROULEUR

(30) Priorität: 20.08.2021 DE 102021121692
(43) Veröffentlichungstag der Anmeldung: 26.06.2024
(73) Patentinhaber: Nögel, Claudia, 49808 Lingen (DE)
(72) Erfinder: Nögel, Claudia, 49808 Lingen (DE)
(74) Vertreter: noventive Patentanwaltsgesellschaft mbH
(86) Internationale Anmeldenummer: PCT/EP2022/072384
(87) Internationale Veröffentlichungsnummer: WO 2023/020900

(56) Entgegenhaltungen:
- WO-A1-2012/149625
- DE-B3- 102019 207 348
- US-A1- 2011 120 389

## Beschreibung

Die Erfindung betrifft eine Leinenvorrichtung für Tiere im Allgemeinen und Hunde im Besonderen, für den Gebrauch beim Spazierengehen mit dem Tier.

Insbesondere Hundehalter benötigen zum Ausführen Ihrer Hunde Hundeleinen, um diese auch bei unvorhersehbaren Ereignissen unter Kontrolle zu haben und den gesetzlichen Vorgaben zu entsprechen. Die Hundeleine wird dabei an einem Ende vom Hundehalter gehalten, wobei das andere Ende über ein Halsband oder ein sogenanntes Hundegeschirr mit dem Hund verbunden ist. Dabei gibt es eine Vielzahl unterschiedlicher Varianten von Leinen, die sich beispielsweise in Ihrer Länge und Benutzung unterscheiden.

Neben kurzen Leinen wie beispielsweise Führer- oder Retrieverleinen sind insbesondere Schleppleinen sehr beliebt. Diese sind einfache Nylonbänder oder Seile, welche in unterschiedlichen Farben und Längen existieren und häufig eine Schlaufe aufweisen, damit sie vom Hundeführer gut gehalten werden können.

Die Schleppleine wird insbesondere zum Training häufig eingesetzt und dient dabei einen gewissen Radius für den Hund vorzugeben und eventuelle Jagdversuche des Hundes oder ähnliches zu unterbinden. Außerdem ist eine Schleppleine leichter zu fassen, wenn der Hund wegrennt, als der Hund selbst. Zudem spürt der Hund den Widerstand der am Boden schleifende Leine und vermutet somit immer den steten Kontakt zum Hundehalter und neigt allein aus diesem Grund mehr seinem Halter zu folgen.

Nachteilig an Schleppleinen ist jedoch, dass diese sich in Gebieten mit dichterem Gestrüpp oder Ästen, wie beispielsweise im Wald, schnell verhaken können und damit den Hund schlagartig, insbesondere aus dem Rennen heraus, blockieren können. Zudem ist die meist längere Leine häufig unpraktisch, wenn der Hundehalter die Leine in der Hand hat und der Hund nah am Hundehalter und um ihn herumläuft und sich dadurch die lange Leine in den Beinen des Hundes oder des Halters verheddert. Um dies zu verhindern, muss der Halter die Leine stets manuell ordnen und muss dann einen großen Teil der Leine in der Hand halten. Dies ist insbesondere dann nachteilig, wenn der Hund ständig den Abstand zum Halter verändert. Außerdem hat das manuelle Ordnen der Leine den zusätzlichen Nachteil, dass es relativ lange dauert und somit die Gefahr besteht, dass beispielsweise Fußgänger oder Radfahrer gestört werden.

Aus diesem Grund gibt es insbesondere fürs normale Spazieren bzw. "Gassigehen", wenn der Hund also nicht unbedingt trainiert werden soll, sogenannte Flexileinen.

Diese rollen sich innerhalb eines Gehäuses, welches vom Hundehalter üblicherweise in der Hand gehalten wird, auf, wodurch sich die Länge der Leine verändert. Begibt sich der Hund weiter weg vom Hundehalter, wird die Leine aus dem Gehäuse ausgerollt, nähert sich der Hund dem Halter wird die Leine aufgerollt.

Das Aufrollen wird dabei meistens durch einen Aufrollmechanismus, bestehend aus einer Trommel und einer Drehfeder hervorgerufen. Durch die Drehfeder wird ein Moment zum Aufrollen der Leine auf die Trommel aufgebracht. Sofern die Leine nicht unter Belastung steht, beispielsweise weil der Hund daran zieht, wird die Leine auf die Trommel aufgerollt. Häufig kann die Trommel vom Hundehalter manuell blockiert werden, sodass sich der Hund nicht weiter vom Halter entfernen kann.

Flexileinen gelten als für den Alltag sehr praktisch und benutzer- und hundefreundlich, weisen jedoch auch Nachteile auf. Diese sind insbesondere diejenigen, dass eine Benutzung wie bei einer Schleppleine, also insbesondere für Ausbildungszwecke nicht möglich ist. Es gibt allerdings Leinenverbindungsstücke, welche als Verlängerung der Leine zwischen Halsband und Flexileine angebracht werden können. Diese können jedoch nicht mit in das Gehäuse der Flexileine aufgerollt werden und stellen einen zusätzlich anzuschaffenden und zu transportierenden Gegenstand dar. Durch eine einfache Verbindung wie beispielswiese einem Klickverschluß wie man ihn von Bauchgurten bei Rucksäcken kennt oder besonderen Formen von Karabinern, kann der Hund von der Leine bzw. vom Leinenverbindungsstück getrennt oder wieder an die Leine genommen werden. Unterschiedliche Leinenfunktionen können dadurch jedoch nicht kombiniert werden. Trotzdem ist es gerade bei der Erziehung junger Hunde aber auch in bestimmten Situationen notwendig oder zumindest ratsam eine Schleppleine zu verwenden, weshalb Hundebesitzer sich beide Leinentypen anschaffen und häufig beim Spazierengehen mit dem Hund beide Leinentypen mitnehmen und je nach Gebiet unterschiedlich einsetzen müssen.

Die Patentschrift DE 10 2019 207 348 B3 offenbart daher einen Leinenanordnung, bei der die Leine im vollständig abgerollten Zustand von einer Trommel abgekoppelt werden kann. Die Leinenvorrichtung kombiniert somit die Vorteile einer Flexileine und einer Schleppleine.

Es ist somit Aufgabe der vorliegenden Erfindung eine Hundeleine bereitzustellen, welche die oben genannten Nachteile beseitigt und möglichst vielseitig einsetzbar ist.

Dies wird vom Gegenstand der unabhängigen Ansprüche 1, 8 und 9 gelöst. Vorteilhafte Weiterbildungen der Erfindung sind in den Unteransprüchen enthalten.

Die erfindungsgemäße Leinenvorrichtung für Hunde weist ein Gehäuse auf, welches dazu eingerichtet ist, von einer Person festgehalten zu werden. Zudem weist die Leinenvorrichtung einen innerhalb des Gehäuses angeordneten Aufrollmechanismus und eine Leine auf, welche dazu konfiguriert ist, mit dem einen Ende mit einem Hund und mit dem anderen Ende über einen Kopplungsmechanismus mit dem Aufrollmechanismus der Leinenvorrichtung verbunden zu sein. Erfindungsgemäß ist der Aufrollmechanismus dazu konfiguriert, die Leine aus einem zumindest teilweise ausgerollten Zustand in das Gehäuse aufzurollen. Die Leine kann dabei ebenfalls vom Aufrollmechanismus abgerollt werden, wenn eine längere abgerollte Leine benötigt wird. Der Kopplungsmechanismus ist derart konfiguriert, dass durch ihn die Leine im vollständig ausgerollten Zustand vom Aufrollmechanismus entkoppelt werden kann, wobei der Kopplungsmechanismus innerhalb des Aufrollmechanismus translatorisch bewegbar angeordnet ist. Eine entkoppelte Leine ist vollständig vom Aufrollmechanismus getrennt und weist keinerlei Verbindung mehr zu diesem auf. Eine entkoppelte Leine kann jedoch wieder mit dem Aufrollmechanismus gekoppelt werden und vom Aufrollmechanismus anschließend wieder in dem Gehäuse aufgerollt werden. Die Verbindung zwischen Leine und Aufrollmechanismus kann im vollständig abgerollten Zustand stets je nach Bedarf getrennt oder hergestellt werden oder anders ausgedrückt die ausgerollte Leine kann beliebig anhand des Kopplungsmechanismus mit dem Aufrollmechanismus gekoppelt und entkoppelt werden.

Anhand der erfindungsgemäßen Leinenvorrichtung können sowohl die Vorteile einer Flexileine als auch die einer Schleppleine in den spezifischen Umgebungssituationen genutzt werden. In einem Zustand, in dem die Leine mit dem Aufrollmechanismus und somit auch mit dem Gehäuse verbunden ist, kann sichergestellt werden, dass die Leine immer nur so weit abgerollt und damit lang ist, wie es der Abstand des Hundes vom Halter erfordert und die Leine sich nicht zwischen den Beinen des Halters oder des Hundes oder in der Vegetation oder ähnliches verheddert.

Weiterhin ist es durch die erfindungsgemäße Leinenvorrichtung im abgekoppelten Zustand der Leine möglich, eine Schleppleinenfunktion herzustellen, wodurch alle Vorteile dieses Leinentyps ebenfalls erreicht werden können.

Selbstverständlich lässt sich der Gegenstand ebenfalls auf andere Tiere als Hunde anwenden, ohne vom Erfindungsgedanken abzurücken.

In einer vorteilhaften Ausführungsform der Erfindung ist der Aufrollmechanismus dazu konfiguriert eine dauerhafte Kraft auf die Leine auszuüben, sodass sich diese im Gehäuse aufrollt. Die Kraft wird dabei bevorzugt durch ein elastisches Element wie beispielsweise eine Drehfeder hervorgerufen. Alternativ oder zusätzlich ist der Aufrollmechanismus derart ausgebildet, dass er in einem Zustand, in dem die Leine vom Aufrollmechanismus entkoppelt ist, blockiert und in einem Zustand, in dem die Leine mit dem Aufrollmechanismus verbunden ist, aktiv ist. Aktiv bedeutet in diesem Zusammenhang, dass der Aufrollmechanismus betätigt werden kann bzw. automatisch betätigt wird, sodass sich die gekoppelte Leine im Gehäuse aufrollt. Blockiert heißt im Gegensatz dazu, dass der Aufrollmechanismus nicht aktiv ist und nicht rotiert bzw. in Rotation versetzt werden kann.

In einer vorteilhaften Ausführungsform der Erfindung weist der Aufrollmechanismus die Möglichkeit auf, den Aufrollmechanismus auch dann zu blockieren, wenn er mit der Leine verbunden ist und noch nicht vollständig ausgerollt ist. Auf diese Weise kann das weitere Ausrollen der Leine verhindert werden, um die abgerollte Leinenlänge zu begrenzen und den Bewegungsradius des Hundes einzuschränken. Diese Blockierfunktion kann vom Hundehalter je nach Bedarf verwendet werden.

In einer weiteren vorteilhaften Ausführungsform der Erfindung verfügt der Aufrollmechanismus über eine Trommel, auf der die Leine aufgerollt wird. Eine Trommel bietet eine praktische Möglichkeit, um eine Leine geordnet und sauber auf und abrollen zu können.

In einer weiteren vorteilhaften Ausführungsform der Erfindung ist der Kopplungsmechanismus durch ein Kopplungselement an der Leine und ein Kopplungsgegenstück an dem Aufrollmechanismus gebildet. Insbesondere vorteilhaft ist diese Ausführungsform, wenn das Kopplungselement und das Kopplungsgegenstück eine formschlüssige Verbindung eingehen. Durch die formschlüssige Verbindung kann sowohl eine sichere Kraftübertragung vom Aufrollmechanismus an die Leine sichergestellt werden als auch eine unkomplizierte Entkopplung der Leine vom Aufrollmechanismus gewährleistet werden.

In einer vorteilhaften Ausführungsform der Erfindung weist die Leine an dem Ende, an dem sie mit dem Aufrollmechanismus verbunden ist, einen runden Querschnitt senkrecht zur Erstreckungsrichtung auf. Der runde Querschnitt kann beispielsweise durch ein Seil gegeben sein. Aufgrund der runden Querschnittsform kann die Leine einfacher als andere Querschnitte in eine dafür vorgesehene Aussparung oder Nut eingesetzt werden, welche in bestimmten Ausführungsformen für den Kopplungsmechanismus benötigt werden. Eine derartige Querschnittsform erleichtert somit den Konstruktionsaufwand eines Kopplungsmechanismus und erleichtert dadurch das Koppeln der Leine mit dem Aufrollmechanismus.

In einer weiteren vorteilhaften Ausführungsform der Erfindung ist der Kopplungsmechanismus innerhalb des Aufrollmechanismus angeordnet und somit in diesem integriert. Erfindungsgemäß ist der Kopplungsmechanismus translatorisch beweglich angeordnet. Durch einen in dem Aufrollmechanismus angeordneten Kopplungsmechanismus kann eine kompakte Bauweise realisiert werden. Ist der Kopplungsmechanismus beweglich angeordnet, kann eine klare Position für den nicht vollständig abgerollten Zustand und eine Position für den abgerollten Zustand der Leine definiert werden und somit das sichere Entkoppeln und Koppeln gewährleistet werden. Es ermöglicht eine Konstruktion, in der eine Entkopplung ausschließlich im vollständig abgerollten Zustand der Leine ermöglicht wird und trägt damit zur Funktionssicherheit bei. Ein translatorisch bewegbarer Kopplungsmechanismus kann beispielsweise über einen Schieber verbunden sein, wobei nur im vollständig abgerollten Zustand der Leine der Schieber in eine Entkopplungsposition bewegt werden kann, in der die Leine vom Aufrollmechanismus entfernt werden kann. Die translatorische Bewegung des Kopplungsmechanismus kann automatisch bei vollständig abgewickelter Leine durch entsprechend vorgesehene Federelemente oder ähnlichem sichergestellt werden oder aber durch eine manuelle Betätigung vorgenommen werden.

Weiterhin vorteilhaft ist die Ausführungsform mit einem beweglich integrierten Kopplungsmechanismus, wenn dieser ein elastisches Element wie beispielsweise eine Feder aufweist, welche eine dauerhafte Kraft auf den Kopplungsmechanismus aufbringt, sodass dieser in einer definierten Position gehalten wird. Dies ermöglicht eine Ausführungsform einer erfindungsgemäßen Leinenvorrichtung, in der der Kopplungsmechanismus von dem elastischen Element in einer Position gehalten wird, in der die Entkopplung von Leine und Aufrollmechanismus nicht möglich ist. In einer derartigen Ausführungsform kann eine Entkopplung nur erfolgen, wenn der Kopplungsmechanismus gegen die Kraft des elastischen Elements bewegt wurde. Dies trägt maßgeblich zur Funktionssicherheit der Vorrichtung bei.

In einer vorteilhaften Ausführungsform der Erfindung weist das Gehäuse ein Gehäusetor, insbesondere mit einem Einrastelement auf, wobei das Gehäusetor dazu ausgebildet ist, entlang des Gehäuses, insbesondere gegen eine Rückstellkraft, vorzugsweise einer Feder, aufgeschoben zu werden und durch welches der Kopplungsmechanismus zumindest so weit aus dem Gehäuse translatorisch bewegt werden kann, dass das Kopplungsgegenstück aus dem Gehäuse ragt. Das vorteilhafte Einrastelement ist dabei dazu ausgeführt in einer entsprechenden Aussparung in einem vorzugsweise nichtbeweglichen Teil der Leinenvorrichtung, insbesondere dem Gehäuse, einzurasten und somit die Position des Gehäusetors in einer geöffneten Stellung zumindest übergangsweise zu fixieren.

In einer vorteilhaften Ausführungsform der Erfindung weist das Kopplungselement eine Verjüngung und/oder eine Abschrägung auf, welche derart ausgeführt ist, dass sie mit dem Gehäusetor derart interagiert, dass bei der translatorischen Bewegung des Kopplungsmechanismus das Einrastelement des Gehäusetors aus der Aussparung geführt wird und insbesondere das Gehäusetor derart geführt wird, dass es bei weiterer Bewegung des Kopplungsmechanismus in eine Einrastaussparung im Kopplungsmechanismus einrastet. Auf diese Weise kann sichergestellt werden, dass durch die translatorische Bewegung des Kopplungsmechanismus das Gehäusetor in eine für die Entkopplung der Leine vorgesehene Position gebracht wird. In dieser Position verhindert dabei das Gehäusetor eine ungewollte translatorische Bewegung des Kopplungsmechanismus zurück in das Gehäuse.

Vorzugsweise weist der Kopplungsmechanismus eine Einrastaussparung auf, welche derart ausgeführt ist, dass ein Teil des Gehäusetors in einem Zustand des Kopplungsmechanismus in dieser Einrastaussparung einrastet, in dem der Kopplungsmechanismus translatorisch zumindest zum Teil aus dem Gehäuse heraus bewegt ist. Somit kann sichergestellt werden, dass das Gehäusetor in einem Zustand, in dem sich der Kopplungsmechanismus zumindest teilweise außerhalb des Gehäuses befindet, nicht schließen kann und der Kopplungsmechanismus lediglich durch Betätigung des Gehäusetors in das Gehäuse bewegt werden kann. Auf diese Weise kann also sichergestellt werden, dass der Kopplungsmechanismus nicht ungewollt translatorisch in das Gehäuse bewegt werden kann.

In einer weiteren vorteilhaften Ausführungsform der Erfindung weist der Kopplungsmechanismus eine Translationssperre auf, welche dazu eingerichtet ist, die translatorische Bewegung des Kopplungsmechanismus bei Trennung des Kopplungselements vom Kopplungsgegenstück zu sperren. Auf diese Weise kann verhindert werden, dass der Kopplungsmechanismus in einem Zustand, in dem das Kopplungselement vom Kopplungsgegenstück getrennt ist, in das Gehäuse bewegt wird. Bevorzugt ist die Translationssperre als Blattfeder ausgeführt, welche derart vorgespannt und ausgebildet ist, dass sie in einem Zustand, in dem das Kopplungselement nicht mit dem Kopplungsgegenstück verbunden ist, derart mit dem Gehäuse in Wechselwirkung tritt, dass die Bewegung des Kopplungsmechanismus gesperrt wird und durch das Verbinden von Kopplungselement mit Kopplungsgegenstück von dem Gehäuse entfernt wird und somit die Sperrwirkung aufgehoben wird.

Vorzugsweise wird diese Ausführungsform mit Translationssperre mit einer Ausführungsform mit Einrastaussparung im Kopplungsmechanismus kombiniert. Auf diese Weise kann eine doppelte Sicherung der translatorischen Bewegung des Kopplungsmechanismus sichergestellt werden und verhindert werden, dass diese Bewegung ungewollt erfolgt.

In einer alternative Ausführungsform mit Trommel weist das Gehäuse eine erste Kopplungsöffnung auf, welche dazu eingerichtet ist, dass das Ende des Seils, welches mit dem Kopplungsmechanismus verbunden ist, durch die Aussparung hindurchgeführt werden kann und mit dem Abrollmechanismus verbunden bzw. gelöst werden kann.

Zusätzlich ist ein Sicherungselement wie beispielsweise eine Sicherungsscheibe zwischen Trommel und Gehäuse vorgesehen, wobei das Sicherungselement auf der Trommel bewegt werden kann und somit verschiedene Positionen einnehmen kann. Dabei weist das Sicherungselement eine zweite Kopplungsöffnung auf, die der Form der im Gehäuse befindlichen ersten Kopplungsöffnung entspricht. Das Sicherungselement kann in eine Position gebracht werden, in der die beiden Kopplungsöffnungen in Deckung gebracht und die Leine entsprechend durch die Kopplungsöffnungen hindurchgeführt werden kann. Befindet sich die Sicherungsscheibe in einer anderen Position kann die Leine nicht aus dem Gehäuse herausgeführt werden und ist somit gegen Entkopplung gesichert.

In einer vorteilhaften Ausführungsform der Erfindung weist die Leinenvorrichtung einen Arretierungsmechanismus auf, welcher dazu konfiguriert ist, die Leine in einem mit dem Aufrollmechanismus gekoppelten Zustand zu arretieren und gegen ungewollte Entkopplung zu sichern. Der Arretierungsmechanismus der Leine kann beispielsweise über eine Kugel mit einer umlaufenden Nut, welche sich am Ende der Leine befindet, sichergestellt werden, wobei die Kugel in ein dazu passendes Gegenstück im Ausrollmechanismus eingelegt werden kann und ein vorgespannter Sicherungshaken in die Nut der Kugel eingreift, um diese in der Position zu halten. Wird der Haken auf Wunsch des Halters im vollabgerollten Zustand der Leine entfernt, kann die Kugel zusammen mit der Leine durch die entsprechende Aussparung im Gehäuse geführt werden und so die Leine vom Aufrollmechanismus getrennt werden.

In einer weiteren vorteilhaften Ausführungsform der Erfindung, ist die Leine reflektierend ausgeführt. Dies erhöht die Sichtbarkeit bei Nacht.

Ebenfalls vorteilhaft ist eine Ausführungsform, in der die Leinenvorrichtung insbesondere am Gehäuse eine Lampe aufweist. Dadurch kann der Hundehalter auch bei Nacht den Weg gut erkennen, wodurch die Sicherheit gesteigert werden kann.

In einer weiteren vorteilhaften Ausführungsform der Erfindung kann das Gehäuse über einen Clip oder eine Kette am Körper des Hundehalters getragen werden.

In einer alternativen erfindungsgemäßen Ausführungsform weist die Leinenvorrichtung für Tiere ein Gehäuse, dazu eingerichtet, von einer Person festgehalten zu werden, ein Aufrollmechanismus, welcher innerhalb des Gehäuses angeordnet ist, eine Leine, dazu konfiguriert mit dem einen Ende mit einem Tier verbunden zu sein und mit dem anderen Ende über einen Kopplungsmechanismus mit dem Aufrollmechanismus der Leinenvorrichtung verbunden zu sein, auf, wobei der Aufrollmechanismus dazu konfiguriert ist, die Leine aus einem zumindest teilweise ausgerollten Zustand in das Gehäuse aufzurollen und wobei der Kopplungsmechanismus dazu konfiguriert ist, die Leine im vollständig ausgerollten Zustand vom Aufrollmechanismus zu entkoppeln, wobei weiterhin der Aufrollmechanismus über eine Trommel verfügt, welche dazu eingerichtet ist, auf ihr die Leine aufzurollen, und wobei der Kopplungsmechanismus in Form eines ausklappbaren Bügels am Umfang der Trommel vorgesehen und derart ausgebildet ist, dass er im eingeklappten Zustand im Umfang der Trommel versenkt ist. Zum Entkoppeln kann der Bügel dann von der Trommel gelöst werden, sodass keine Verbindung mehr zwischen dem Aufrollmechanismus und der Leine besteht. Die Ausführungsform hat zum einen den Vorteil, dass durch die Einpassung des Bügels in der Trommel eine runde Form entsteht, die ein problemloses Aufrollen der Leine auf der Trommel durch den Aufrollmechanismus sicherstellt. Zum anderen dient der Bügel im entkoppelten Zustand als Handgriff für den Hundehalter, der somit auch die lose Leine im Bedarfsfall gut halten kann. Der Bügel kann beispielsweise über eine Klickverbindung formschlüssig mit dem Aufrollmechanismus verbunden werden.

Im Folgenden werden Ausführungsformen der vorliegenden Erfindung unter Bezugnahme auf die beiliegenden Figuren näher erläutert.
- Fig. 1: zeigt eine erste Ausführungsform der Erfindung in einer perspektivischen Darstellung
- Fig. 2: zeigt den Kopplungsmechanismus der in Fig.1 gezeigten Ausführungsform in einer Detailansicht
- Fig. 3: zeigt einen Aufroll- und Kopplungsmechanismus in einer weiteren Ausführungsform der Erfindung
- Fig. 4: zeigt eine dritte Ausführungsform der Erfindung
- Fig. 5: zeigt den Aufroll- und Kopplungsmechanismus der in Fig. 4 gezeigten Ausführungsform der Erfindung in einer Detailansicht
- Fig. 6a: zeigt eine weitere Ausführungsform der erfindungsgemäßen Leinenvorrichtung 10 in einer Schnittansicht und einer ersten Konfiguration
- Fig. 6b: zeigt eine zweite Konfiguration der erfindungsgemäßen Ausführungsform aus Fig. 6a
- Fig. 6c: zeigt eine dritte Konfiguration der erfindungsgemäßen Ausführungsform aus Fig. 6a
- Fig. 6d: zeigt die dritte Konfiguration der erfindungsgemäßen Ausführungsform aus Fig. 6c in einer perspektivischen Ansicht.

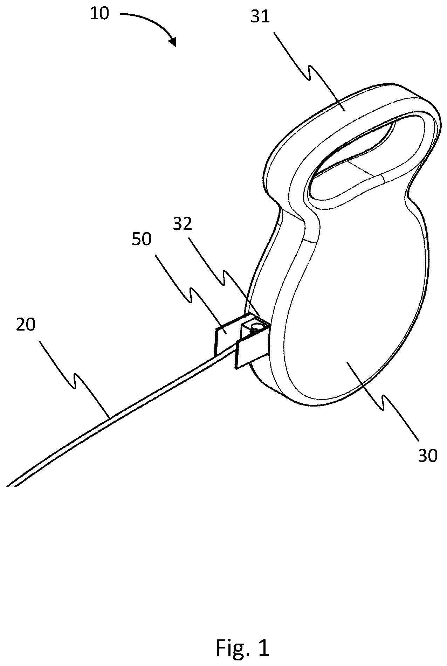

**Fig. 1** zeigt eine erste Ausführungsform der erfindungsgemäßen Leinenvorrichtung 10 in einer perspektivischen Darstellung. Die Leinenvorrichtung 10 weist eine Leine 20 auf, welche aus einem Gehäuse 30 herausgeführt wird. Das Gehäuse 30 weist einen Griff 31 auf, welcher von einem nicht dargestellten Hundeführer in der Hand gehalten wird. Die Form des Gehäuses 30 ist dabei nicht auf die in der in Fig. 1 gezeigte Form limitiert, sondern kann andere Formen annehmen. Die Leine 20 ist mit einem nicht dargestellten Hund verbunden. Die Leinenvorrichtung 10 weist innerhalb des Gehäuses 30 einen Aufrollmechanismus auf, welcher wiederum über einen Kopplungsmechanismus 50 verfügt. In der gezeigten Ausführungsform ragt dieser im vollabgewickelten Zustand der Leine, wie in Fig. 1 gezeigt, aus einer Gehäuseöffnung 32 aus dem Gehäuse 30 heraus. In diesem Zustand kann die Leine 20 vom Kopplungsmechanismus gelöst werden.

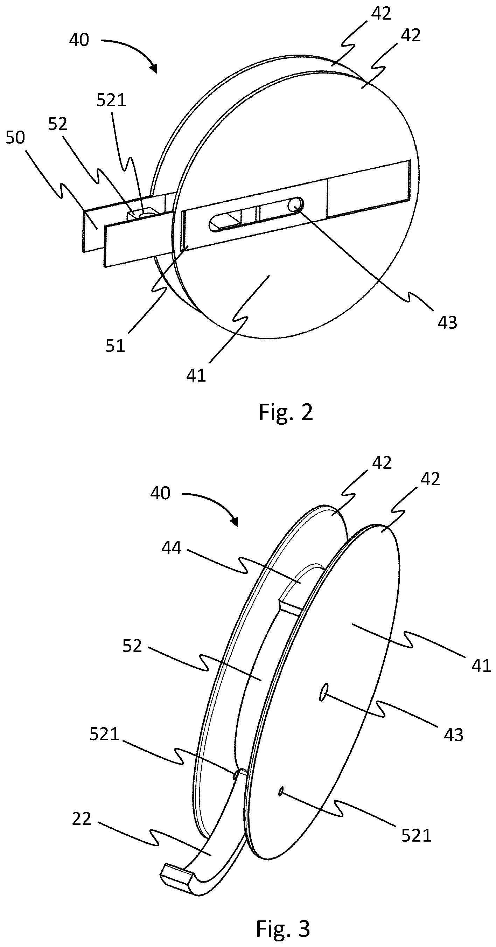

**Fig. 2** zeigt den Aufrollmechanismus 40 aus der in Fig. 1 gezeigten Ausführungsform der erfindungsgemäßen Leinenvorrichtung 10. Der Aufrollmechanismus 40 ist in Form einer Trommel 41 gegeben, auf welcher die Leine 20 aufgewickelt werden kann. Die Trommel 41 verfügt über einen Mittelpunkt 43, zwei Seitenwände 42 und eine zwischen den Seitenwänden 42 angeordnete Aufrollfläche 44, welche in der in Fig. 2 gezeigten Ansicht nicht zu sehen ist. Die Aufrollfläche 44 weist ebenso wie die Seitenwände 42 einen runden Querschnitt auf, wobei der Radius der Aufrollfläche 44 sinnvoller Weise geringer ist als der der Seitenwände 42. Wird die Leine 20 auf der Aufrollfläche 44 durch Rotation der Trommel 41 um dessen Mittelpunkt 43 aufgerollt, dienen die beiden Seitenwände 42 der Leine 20 als seitliche Begrenzung, sodass ein sicheres Auf- und Abrollen der Leine gewährleistet werden kann, ohne dass sich die Leine 20 verknotet oder verkantet. Die Trommel 41 weist somit in etwa die Form einer Kabeltrommel, wie man sie im Elektrobereich findet, oder einer Schlauchtrommel für einen Gartenschlauch, auf.

Die Rotation zum Aufrollen der Leine 20 kann dabei beispielsweise von einer Drehfeder erzeugt werden, welche ein Moment auf die Trommel 41 aufbringt und dazu eingerichtet ist, die Trommel 41 immer so zu drehen, dass auf die Leine 20 wiederum eine Kraft wirkt, durch die sie auf der Trommel 41 aufgerollt wird. Derartige oder ähnliche Systeme mit der beschriebenen Wirkungsweise sind bereits aus den eingangsbeschriebenen Flexileinen bekannt, weshalb an dieser Stelle nicht weiter auf die zugrundeliegende Technik eingegangen werden muss. Jedenfalls ist es dem Hundeführer vorteilhafter Weise ebenfalls möglich die Rotation der Trommel 41 zu blockieren und somit das Aufrollen bzw. Abrollen der Leine 20 zu unterbinden, falls dies gewünscht sein sollte.

In der in Fig. 2 gezeigten Ausführungsform des Aufrollmechanismus 40, weist dieser weiterhin einen Kopplungsmechanismus 50 in Form eines Kopplungsschiebers 51 auf. Der Kopplungsschieber 51 wiederum weist ein Kopplungsgegenstück 52 mit einer Kopplungsaussparung 521 auf. Zum Entkoppeln der Leine 20 vom Aufrollmechanismus 40 wird der Kopplungsschieber 51 translatorisch verschoben und eine entsprechende Aussparung in den Seitenwänden 42 geführt. Durch das Verschieben wird das Kopplungsgegenstück 52 aus der Aufrollfläche 44 herausgeschoben, bis die Kopplungsaussparung 521 freiliegt. Die Verschiebung kann dabei beispielsweise durch einen entsprechenden Schieber an der Außenseite des Gehäuses 30 oder durch einen anderen Mechanismus durchgeführt werden.

Die Kopplungsaussparung 521 weist eine bestimmte Form auf, welche einem an dem Ende der Leine 20 angeordneten Kopplungselements 21 entspricht. Diese Form kann beispielsweise eine Kugel oder ein Würfel oder eine andere geometrische Form sein. Zum Entkoppeln der Leine 20 vom Aufrollmechanismus 40 wird dieses Kopplungselement 21 aus der Kopplungsaussparung 521 herausgenommen, sodass keine Verbindung mehr zwischen Leine 20 und Aufrollmechanismus 40 besteht. Zum Einkoppeln, also Verbinden der Leine 20 mit dem Aufrollmechanismus 40, wird das Kopplungselement 21 der Leine 20 wieder in die Kopplungsaussparung 521 eingesetzt und der Kopplungsschieber 51 wieder zurückgeschoben, sodass das Kopplungsgegenstück 52 wieder in der Aufrollfläche 44 versenkt wird und die Leine 20 durch die Rotation der Trommel 41 wieder aufgerollt werden kann.

Weiterhin ist es denkbar, das Kopplungselement 21 der Leine 20 zusätzlich in der Kopplungsaussparung 521 zu sichern. Dies kann beispielsweise über einen Magnet in der Kopplungsaussparung 521 erreicht werden, welcher das Kopplungselement 21 der Leine 20 anzieht. Ebenfalls ist denkbar in der Aussparung einen beweglichen Vorsprung, bspw. in Form eines Hakens, vorzusehen, welcher in eine dafür vorgesehene Nut im Kopplungselement 21 einfasst und somit das Kopplungselement in der Kopplungsaussparung 521 hält. Der Vorsprung lässt sich dabei auch derart bewegen, dass er nicht mehr in die Nut eingreift und das Kopplungselement 21 somit freigibt. Dieser Mechanismus ist als Arretierungsmechanismus zu verstehen, welcher das Kopplungselement 21 in der Kopplungsaussparung 521 arretiert bzw. sichert.

Die gezeigte Ausführungsform hat den Vorteil, dass ein Verschieben des Kopplungsschiebers 51 und damit eine Trennung der Leine 20 vom Aufrollmechanismus 40 erst dann möglich ist, wenn die Leine 20 komplett abgerollt ist. Es ist somit eine Art selbstsicherndes System.

**Fig. 3** zeigt eine weitere Ausführungsform eines Kopplungsmechanismus 50 zwischen der Leine 20 und dem Aufrollmechanismus 40. Auch diese Ausführungsform weist als Aufrollmechanismus 40 eine Trommel 41 mit zwei Seitenwänden 42 und einer dazwischenliegenden Aufrollfläche 44 auf. Das zum Aufrollmechanismus 40 zur Ausführungsform aus Fig. 2 Gesagte insbesondere hinsichtlich der Rotation der Trommel 41 zum Aufrollen der Leine 20 gilt somit entsprechend und es wird im Weiteren lediglich auf die Unterschiede zwischen den Ausführungsformen der Kopplungsmechanismen 50 aus den Figuren 2 und 3 eingegangen.

Im Gegensatz zur Ausführungsform in Fig. 2 weist die Ausführungsform in Fig. 3 keinen Kopplungsschieber 51 auf, sondern lediglich ein Kopplungsgegenstück 52 in Form einer Vertiefung in der Aufrollfläche 44. Das Kopplungselement 21 der Leine 20 ist hier als eine Art kreisabschnittsförmiger Bügel 22 ausgebildet, welcher exakt der Vertiefung, also dem Kopplungsgegenstück 52 in der Aufrollfläche 44 entspricht. Ist der Bügel 22 in die Vertiefung eingesetzt entsteht eine runde Aufrolloberfläche 44 auf der die Leine 20 aufgerollt werden kann. Das Ende des Bügels 22 ist dabei über einen Formschluss, welcher durch zwei vorstehende Elemente am Bügel, die in zwei Kopplungsaussparungen 521 jeweils in die Seitenwände 42 eingreifen, an dem Aufrollmechanismus 40 befestigt. Werden die vorstehenden Elemente des Bügels 22 aus den Kopplungsaussparungen 521 gedrückt, wird der Bügel 22 vom Aufrollmechanismus 40 gelöst und die Leine 20 vom Aufrollmechanismus 40 entkoppelt.

Selbstverständlich sind auch andere Formen der Verbindung zwischen dem Bügel 22 und dem Aufrollmechanismus denkbar. So sind beispielsweise andere Optionen des Formschlusses möglich oder aber auch die Verwendung von Magneten oder Ähnlichem.

Die Leine 20 an sich ist in Fig. 2 nicht dargestellt, ist jedoch fest mit dem freien Ende des Bügels 22, also mit dem Ende, mit dem der Bügel 22 nicht an den Seitenwänden 42 befestigt ist, verbunden.

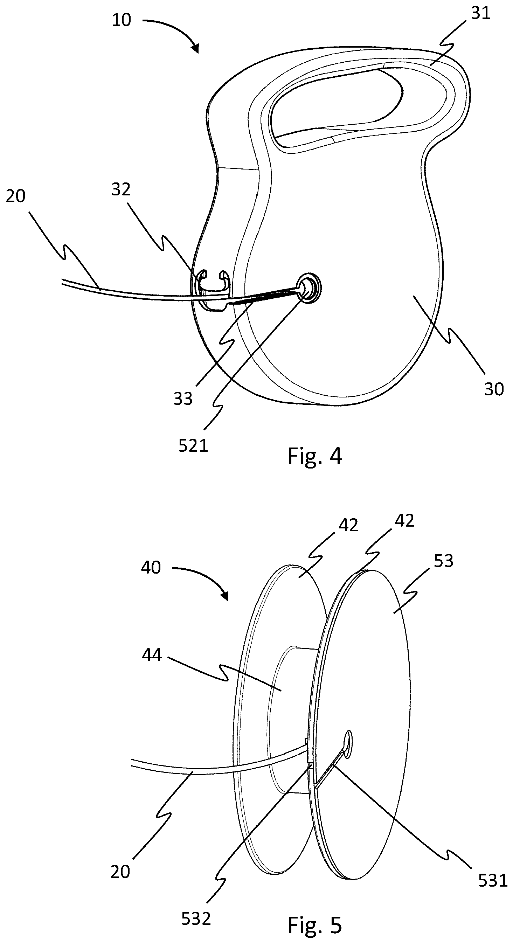

**Fig. 4** zeigt die erfindungsgemäße Leinenvorrichtung 10 in einer dritten Ausführungsform. Wie die in Fig. 1 gezeigte Ausführungsform weist auch die Ausführungsform aus Fig. 4 ein Gehäuse 30 mit einem Griff 31 und einer Gehäuseöffnung 32, aus der eine Leine 20 herausgeführt wird auf. Ebenso wird die Leine 20 auch in dieser Ausführungsform anhand eines Aufrollmechanismus (nicht dargestellt) im Inneren des Gehäuses 30 aufgerollt. Zusätzlich ist in Fig. 4 eine erste Kopplungsöffnung 33 im Gehäuse 30 zu erkennen. Auf das Prinzip des Kopplungsmechanismus in dieser Ausführungsform wird im Folgenden insbesondere unter Bezugnahme der Fig. 5 näher eingegangen.

**Fig. 5** zeigt den bereits aus den Figuren 2 und 3 bekannten grundsätzlichen Aufrollmechanismus 40 in Form der Trommel 41 mit den beiden Seitenwänden 42 und der Aufrollfläche 44. Der Kopplungsmechanismus 50 ist in dieser Ausführungsform jedoch anders ausgeführt. Dieser weist eine Sicherungsscheibe 53 auf, welche an einer der beiden Seitenwände 42 anliegt. In der gezeigten Ausführungsform ist die Sicherungsscheibe 53 grundsätzlich formgleich mit den Seitenwänden 42 des Aufrollmechanismus 40.

Im Aufrollmechanismus 40 ist eine Kopplungsaussparung 521 (siehe Fig. 4) vorgesehen, welche entsprechend einem Kopplungselement 21 am Ende der Leine 20 ausgeführt ist. In diese Kopplungsaussparung 521 kann das Kopplungselement 21 der Leine 20 eingesetzt werden. Damit die Leine 20 an sich ebenfalls im Aufrollmechanismus 40 versenkt werden kann und nicht übersteht, ist in der Seitenwand 42 und der Auflagefläche eine entsprechende Nut vorgesehen. Zusätzlich ist in der Sicherungsscheibe 53, durch welche die Leine 20 mit dem Kopplungselement 21 ebenfalls hindurchgeführt werden muss, eine entsprechende Aussparung in Form einer zweiten Kopplungsöffnung 531 vorgesehen. Zudem weist die Sicherungsscheibe 53 eine Rippe 532 auf, welche sich auf der der Seitenwand 42 zugewandten Seite befindet und versetzt zur zweiten Kopplungsöffnung 531 angeordnet ist.

Die Sicherungsscheibe 53 ist auf der Seitenwand 42 drehbar gelagert, sodass die zweite Kopplungsöffnung 531 in eine Position gebracht werden kann, dass sie exakt deckungsgleich ist mit der Aussparung in der Seitenwand 42 und der ersten Kopplungsöffnung 33 des Gehäuses 30 durch welche die Leine 20 zum Entkoppeln hindurchgeführt werden muss. In dieser Position (Herausnahmeposition) kann also die Leine 20 mit dem Kopplungsstück am Ende aus der Kopplungsaussparung herausgenommen werden und aus dem Gehäuse herausgeführt werden. Diese Position ist in Fig. 4 abgebildet.

Ist die Sicherungsscheibe 53 jedoch in einer gegen die Seitenwand 42 verdrehten Position, so befindet sich die zweite Kopplungsöffnung 531 der Sicherungsscheibe 53 nicht in Deckung mit den entsprechenden Aussparungen in der Seitenwand 42 und dem Gehäuse 30 (siehe Fig. 4). Die Leine 20 kann in dieser Position der Sicherungsscheibe 53 also nicht vom Aufrollmechanismus 40 entkoppelt werden und ist gegen Herausnahme gesichert. In dieser Position kann die Leine 20 vom Aufrollmechanismus 40 gefahrlos aufgerollt werden.

In der gezeigten Ausführungsform aus Fig. 5 befindet sich in dieser gesicherten Position die Rippe 532 in der Aussparung der Seitenwand 42, wodurch die Position klar definiert ist. Die Verdrehung der Sicherungsscheibe 53 von der gesicherten Position in die Herausnahmeposition wird vom Hundehalter selbst vorgenommen. Für die Drehung der Sicherungsscheibe 53 kann beispielsweise eine blockierbare Drehfeder, ein am Gehäuse zu betätigender Schieber oder Ähnliches zum Einsatz kommen.

In all den geschilderten Ausführungsformen wird die Aufrollfunktion des Aufrollmechanismus 40 im vollständig abgerollten Zustand der Leine blockiert und erst wieder durch eine manuelle Betätigung, welche auch einhergehen kann mit dem Einkoppeln der Leine, wieder aufgenommen wird. Auf diese Weise kann sichergestellt werden, dass sobald die Leine 20 entnommen wird, sich der Aufrollmechanismus 40 in Form der Trommel 41 in der Position bleibt, die es ermöglicht die Leine 20 wieder einzukoppeln. In der in Fig. 2 gezeigten Ausführungsform kann die Blockierfunktion des Aufrollmechanismus 40 beispielsweise an die Bewegung eines Arretiermechanismus (siehe oben) in Form eines beweglichen Vorsprungs in der Kopplungsaussparung 521, welche in eine Nut oder Ähnliches im Kopplungselement 21 der Leine 20 eingreift, gekoppelt werden. In der in Figs. 4 und 5 gezeigten Ausführungsform kann der Blockierfunktion beispielsweise an die Drehung der Sicherungsscheibe 53 gekoppelt werden.

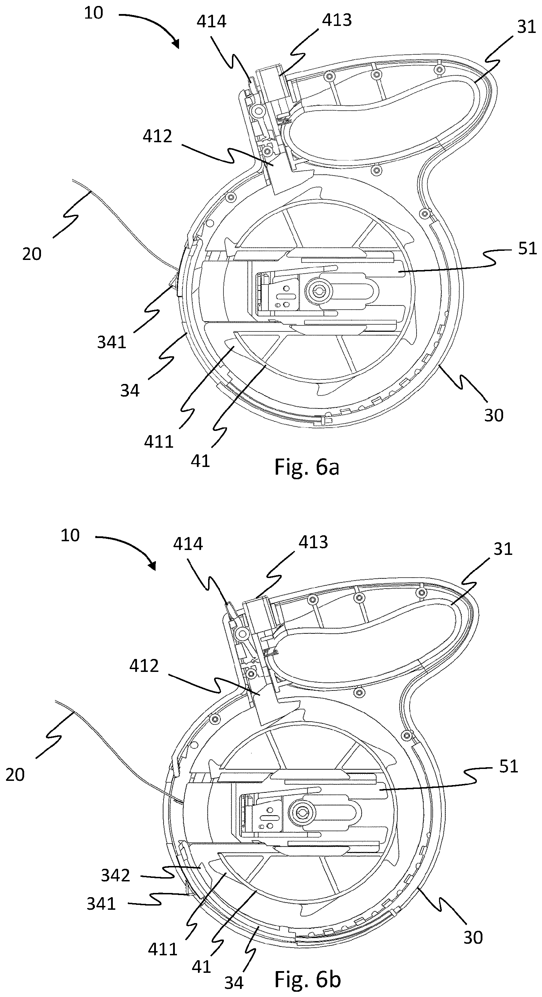

Figs. 6a bis 6d zeigen eine Schnittansicht einer weiteren erfindungsgemäßen Ausführungsform der Leinenvorrichtung für einen Hund, wobei die Funktion des Kopplungsmechanismus 50 in dieser Ausführungsform im Folgenden anhand der Figuren 6a bis 6d näher erläutert wird.

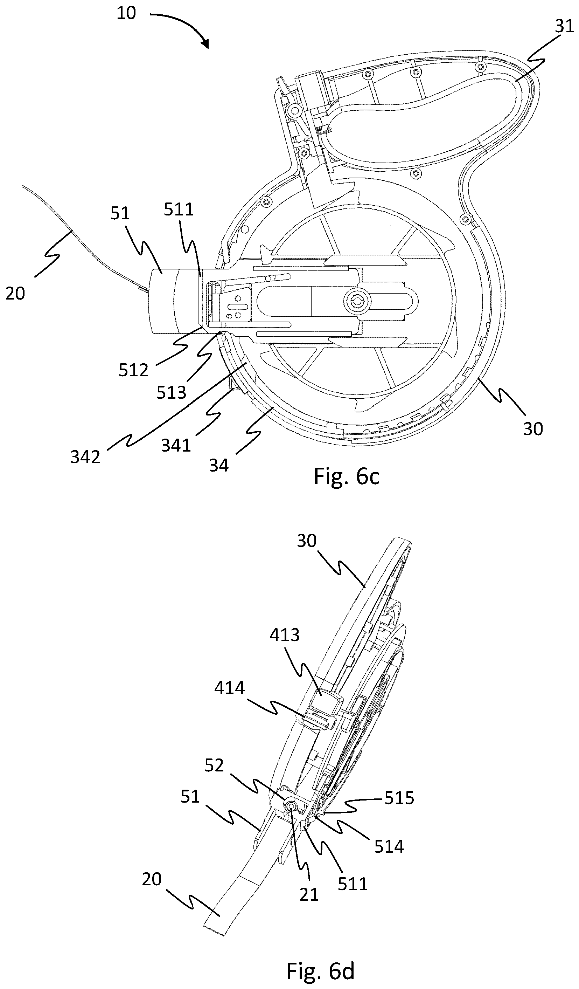

Die gezeigte Ausführungsform weist ein Gehäuse 30 mit einem Griff 31 und einem Aufrollmechanismus 40 in Form einer Trommel 41 auf. Die Trommel 41 weist einen Kopplungsmechanismus 50 mit einem Kopplungsschieber 51 auf, welcher translatorisch in Zeichenebene der Figs. 6a bis 6c horizontal verschiebbar ist und über ein Kopplungselement 21 und einem Kopplungsgegenstück 52 (siehe Fig. 6d) mit einer Leine 20 verbunden ist. Die Leine 20 ist dabei auf der Trommel 41 auf- und abwickelbar. Die Trommel 41 ist durch eine Feder (nicht dargestellt) derartig vorgespannt, dass die Leine 20 ohne Belastung auf der Trommel 41 aufgewickelt wird. Durch die Wahl einer geeigneten Federstärke kann bestimmt werden, wie stark an der Leine 20 gezogen werden muss, damit sie von der Trommel 41 abgewickelt wird.

In Umfangsrichtung der Trommel 41 sind mehrere Trommelrasten 411 angeordnet. Ferner sind in der Nähe des Griffs 31 eine Rotationssperre 412 angeordnet, welche über ein Sperrbetätigungselement 413 betätigt werden kann. Will der Hundehalter ein Abwickeln oder Aufwickeln der Leine 20 auf der Trommel 41 verhindern, betätigt er das Sperrbetätigungselement 413, wodurch die Rotationssperre 412 in Richtung der Trommel 41 bewegt wird und die Rotationssperre 412 gegen die Trommelrasten 411 gedrückt und somit eine Rotation der Trommel 41 unterbunden wird. Die Betätigung der Rotationssperre 412 erfolgt dabei vorzugsweise gegen eine Feder, sodass die Rotationssperre 412 ohne Betätigung nicht die Drehung der Trommel 41 behindert. Um eine Arretierung der Rotation der Trommel 41 sicherzustellen ohne das Sperrbetätigungselement 413 andauernd betätigen/drücken zu müssen, ist eine Sperrarretierung 414 vorgesehen, welche in den Mechanismus der Rotationssperre 412 eingreift und in der Sperrstellung, also im Eingriff mit den Trommelrasten 411, arretieren kann.

Des Weiteren weist die gezeigte Ausführungsform ein Gehäusetor 34 auf, welches über ein Gehäusebetätigungselement 341 gegen eine Feder geöffnet werden kann und somit von der Feder bei Nichtbetätigung im geschlossenen Zustand gehalten wird. Das Gehäusetor 34 ist dazu eingerichtet, dass im geöffneten Zustand des Gehäusetors 34 der Kopplungsschieber 51 durch das Gehäusetor 34 aus dem Gehäuse 30 translatorisch bewegt werden kann, wie in den Konfigurationen der Figuren 6b und 6c näher dargestellt wird.

In der in Fig. 6a gezeigten Konfiguration kann die Leine 20 frei abgewickelt werden, befindet sich jedoch noch nicht im komplett abgewickelten Zustand. Ein Hund, welcher durch die Leine 20 mit der Leinenvorrichtung 10 verbunden ist, kann sich somit frei vom Hundehalter, der die Leinenvorrichtung 10 am Griff 31 hält, entfernen oder sich ihm nähern, wobei die Länge der Leine 20 sich der Entfernung des Hundes anpasst.

In der in Fig. 6b dargestellten Konfiguration ist die Leine 20 vollständig von der Trommel 41 abgewickelt und der Hundehalter möchte die Leine 20 von der Trommel 41 trennen. Dazu wird, wie dargestellt, das Sperrbetätigungselement 413 vom Hundehalter betätigt, sodass die Rotationssperre 412 auf eine der Trommelrasten 411 drückt und einen Formschluß bildet, wodurch eine Rotation der Trommel 41 verhindert wird. Um die Sperrwirkung zu arretieren, wird die Sperrarretierung ebenfalls betätigt.

Zudem schiebt der Hundehalter über das Gehäusetorbetätigungselement 341 so lange das Gehäusetor 34 gegen die Feder auf, bis ein Einrastelement 342 am Gehäusetor 34 in einer dafür vorgesehenen Aussparung am Gehäuse 30 (Aussparung nicht dargestellt) einrastet und das Gehäusetor 34 in dieser geöffneten Position fixiert.

Befindet sich die Leinenvorrichtung 10 in der in Fig. 6b dargestellten Konfiguration, kann die translatorische Bewegung des Kopplungsschiebers 51 erfolgen, sodass der Kopplungsschieber 51 zumindest teilweise aus dem Gehäuse 30 ragt. Diese Konfiguration ist in Fig. 6c dargestellt. Der Kopplungsschieber 51 weist weiterhin eine Verjüngung 511 und eine Abschrägung 512 sowie eine Einrastaussparung 513 auf. Die Verjüngung reduziert dabei die Breite des vorderen Teils des Kopplungsschiebers 51, also des Teils, in dem sich das Kopplungsgegenstück 52 befindet.

Bei der translatorischen Bewegung des Kopplungsschiebers 51 aus dem Gehäuse 30 stößt dabei der in Zeichnungsebene obere Teil des Gehäusetors 34 an der Verjüngung 511 bzw. der Abschrägung 512 an. Dadurch wird das Gehäusetor 34 um ein bestimmtes Stück in Zeichnungsebene nach unten verschoben, sodass das Einrastelement 342 des Gehäusetors 34 aus der Aussparung im Gehäuse 30 gedrückt wird. Dabei wird das Gehäusetor 34 durch die entsprechende Feder von unten gegen den Kopplungsschieber 51 gedrückt und kann somit nicht schließen. Durch die weitere Bewegung des Kopplungsschiebers 51 rastet das Gehäusetor 34 in der Endposition des Kopplungsschiebers 51 in der dafür vorgesehenen Einrastaussparung 513 im Kopplungsschieber 51 ein. Durch das Einrasten ist eine Bewegung des Kopplungsschiebers 51 erst dann wieder möglich, wenn das Gehäusetor 34 durch das Gehäusetorbetätigungselement 341 nach unten geschoben wird und somit die Bewegung des Kopplungsschiebers 51 freigibt. Auf diese Weise kann eine sichere Positionierung des Kopplungsschiebers 51 während des Kopplungsvorgangs gewährleistet werden.

Fig. 6d zeigt die Ausführungsform in der gleichen Konfiguration wie Fig. 6c, allerdings in einer perspektivischen Ansicht, wobei eine Hälfte des Gehäuses 30 nicht dargestellt ist. Fig. 6d offenbart das Kopplungselement 21 an der Leine 20 und das Kopplungsgegenstück 52, in welches das Kopplungselement 21 zur Verbindung mit bzw. Entfernung von der Trommel 41 eingesetzt und entfernt werden kann.

Weiterhin weist der Kopplungsschieber 51 eine Translationssperre 514 mit einem Stift 515 auf. Die Translationssperre 514 ist in Form einer Blattfeder ausgeführt, welche derart vorgespannt ist, dass sie eine Kraft erfährt, welche vom Kopplungselement 21 weg weist. Ist das Kopplungselement 21 nicht in dem Kopplungsgegenstück 51 eingesetzt, bewegt sich also die Translationssperre 514 von dem Kopplungsgegenstück 52 weg. Dadurch greift der Stift 515 in eine dafür vorgesehene Aussparung im Gehäuse 30 ein, wodurch die translatorische Bewegung des Kopplungsschiebers 51 verhindert wird, wenn das Kopplungselement 21 nicht im Kopplungsgegenstück 52 eingesetzt ist.

Um diese Verknüpfung zwischen Kopplungselement 21 und Translationssperre 514 umzusetzen, ragt in der gezeigten Ausführungsform ein Teil der Translationssperre 514 in das Kopplungsgegenstück 52 hinein, wobei dieser Teil eine Schräge aufweist. Beim Einsetzen des Kopplungselements 21 in das Kopplungsgegenstück 52, wird also das Kopplungselement 21 entlang der Schräge geführt und somit die Translationssperre 514 an das Kopplungsgegenstück 52 und das Kopplungselement 21 gezogen. Wird das Kopplungselement 21 entfernt, bewegt sich die Translationssperre 514 durch ihre Form als vorgespannte Blattfeder wieder vom Kopplungsgegenstück 52 weg und die Sperrwirkung setzt ein.

Um die Verbindung zwischen Leine 20 und Trommel 41 wieder herzustellen, wird das Kopplungselement 21 wieder in das Kopplungsgegenelement 52 eingesetzt. Dadurch wird wie beschrieben die Translationssperre 514 gelöst. Weiterhin wird das Gehäusetor 34 über das Gehäusetorbetätigungselement 341 kurz nach unten betätigt, wodurch das Gehäusetor 34 aus der Einrastaussparung 513 herausgeschoben wird und der Kopplungsschieber 51 translatorisch wieder in das Gehäuse 34 eingeschoben werden kann bis er sich in der Ausgangslage (siehe Fig. 6b) befindet. Anschließend wird das Gehäusetor 34 durch die Federkraft geschlossen und die Rotationssperre 412 durch Betätigung der Sperrarretierung 414 und des Sperrbetätigungselements 413 gelöst. Die Leinenvorrichtung 10 kann dann wieder als Flexileine verwendet werden.

### BEZUGSZEICHENLISTE

- 10: Leinenvorrichtung
- 20: Leine
- 21: Kopplungselement
- 22: Bügel
- 30: Gehäuse
- 31: Griff
- 32: Gehäuseöffnung
- 33: erste Kopplungsöffnung (am Gehäuse)
- 34: Gehäusetor
- 341: Gehäusetorbetätigungselement
- 342: Einrastelement
- 40: Aufrollmechanismus
- 41: Trommel
- 411: Trommelraste
- 412: Rotationssperre
- 413: Sperrbetätigungselement
- 414: Sperrarretierung
- 42: Seitenwand
- 421: zweite Kopplungsöffnung (Seitenwand)
- 43: Mittelpunkt
- 44: Aufrollfläche
- 50: Kopplungsmechanismus
- 51: Kopplungsschieber
- 511: Verjüngung
- 512: Abschrägung
- 513: Einrastaussparung
- 514: Translationssperre
- 515: Stift
- 52: Kopplungsgegenstück
- 521: Kopplungsaussparung
- 53: Sicherungsscheibe
- 531: zweite Kopplungsöffnung (Sicherungsscheibe)
- 532: Rippe (Sicherungsscheibe)

## Patentansprüche

1. Leinenvorrichtung (10) für Tiere, aufweisend
ein Gehäuse (30), dazu eingerichtet, von einer Person festgehalten zu werden,
ein Aufrollmechanismus (40), welcher innerhalb des Gehäuses (30) angeordnet ist,
eine Leine (20), dazu konfiguriert mit dem einen Ende mit einem Tier verbunden zu sein und mit dem anderen Ende über einen Kopplungsmechanismus (50) mit dem Aufrollmechanismus (40) der Leinenvorrichtung verbunden zu sein, wobei
der Aufrollmechanismus (40) dazu konfiguriert ist, die Leine (20) aus einem zumindest teilweise ausgerollten Zustand in das Gehäuse (30) aufzurollen und wobei
der Kopplungsmechanismus (50) dazu konfiguriert ist die Leine (20) im vollständig ausgerollten Zustand vom Aufrollmechanismus (40) zu entkoppeln, und **dadurch gekennzeichnet, dass**
der Kopplungsmechanismus (50) innerhalb des Aufrollmechanismus (40) translatorisch bewegbar angeordnet ist.

2. Leinenvorrichtung (10) gemäß Anspruch 1, wobei der Aufrollmechanismus (40) eine dauerhafte Kraft auf die Leine (20) aufbringt, welche dazu konfiguriert ist, die Leine (20) in dem Gehäuse (30) aufzurollen und insbesondere durch ein elastisches Element hervorgerufen wird und/oder wobei der Aufrollmechanismus (40) derart ausgebildet ist, dass er in einem Zustand, in dem die Leine (20) vom Aufrollmechanismus (40) entkoppelt ist, blockiert und in einem Zustand, in dem die Leine (20) mit dem Aufrollmechanismus (40) verbunden ist, aktiv ist.

3. Leinenvorrichtung (10) gemäß einem der vorhergehenden Ansprüche, wobei der Kopplungsmechanismus (50) durch ein Kopplungselement (21) an der Leine und ein Kopplungsgegenstück (52) an dem Aufrollmechanismus (40) gebildet ist.

4. Leinenvorrichtung (10) gemäß dem vorherigen Anspruch, wobei der Kopplungsmechanismus (50) durch eine formschlüssige Verbindung gegeben ist.

5. Leinenvorrichtung (10) gemäß einem der vorhergehenden Ansprüche, wobei die Leine (20) an dem Ende, an dem sie mit dem Tier verbunden ist in der Form eines Seils ausgebildet ist.

6. Leinenvorrichtung (10) gemäß einem der vorherigen Ansprüche, wobei der Aufrollmechanismus (40) über eine Trommel (41) verfügt, welche dazu eingerichtet ist auf ihr die Leine (20) aufzurollen.

7. Leinenvorrichtung (10) gemäß einem der vorherigen Ansprüche, wobei der Kopplungsmechanismus (50) ein elastisches Element aufweist, welches dazu konfiguriert ist, den Kopplungsmechanismus (50) in einer definierten Position im Aufrollmechanismus (40) zu halten.

8. Leinenvorrichtung (10) für Tiere, aufweisend
ein Gehäuse (30), dazu eingerichtet, von einer Person festgehalten zu werden,
ein Aufrollmechanismus (40), welcher innerhalb des Gehäuses (30) angeordnet ist,
eine Leine (20), dazu konfiguriert mit dem einen Ende mit einem Tier verbunden zu sein und mit dem anderen Ende über einen Kopplungsmechanismus (50) mit dem Aufrollmechanismus (40) der Leinenvorrichtung verbunden zu sein, wobei
der Aufrollmechanismus (40) dazu konfiguriert ist, die Leine (20) aus einem zumindest teilweise ausgerollten Zustand in das Gehäuse (30) aufzurollen und wobei
der Kopplungsmechanismus (50) dazu konfiguriert ist die Leine (20) im vollständig ausgerollten Zustand vom Aufrollmechanismus (40) zu entkoppeln, wobei
der Aufrollmechanismus (40) über eine Trommel (41) verfügt, welche dazu eingerichtet ist auf ihr die Leine (20) aufzurollen, und
wobei das Gehäuse (30) eine erste Kopplungsöffnung (33) aufweist, welche dazu eingerichtet ist, dass das Ende der Leine (20), welches mit dem Aufrollmechanismus (50) verbunden ist, durch die erste Kopplungsöffnung (33) hindurchgeführt werden kann, wobei
der Aufrollmechanismus (40) eine Kopplungsaussparung (521) aufweist, welche entsprechend einem Kopplungselement (21) am Ende der Leine (20) ausgeführt ist, und in welcher das Kopplungselement (21) der Leine (20) eingesetzt werden kann,
**dadurch gekennzeichnet, dass**
der Kopplungsmechanismus (50) zusätzlich ein Sicherungselement (53) wie beispielsweise eine Sicherungsscheibe zwischen Trommel (41) und Gehäuse (30) aufweist, wobei
das Sicherungselement (53) auf der Trommel (41) bewegt werden kann und somit verschiedene Positionen einnehmen kann, wobei
das Sicherungselement (53) eine zweite Kopplungsöffnung (531) aufweist, die der Form der im Gehäuse (30) befindlichen ersten Kopplungsöffnung (33) entspricht, wobei
das Sicherungselement (53) von einer Position, in der die beiden Kopplungsöffnungen (33, 531) in Deckung sind und die Leine (20) entsprechend durch die Kopplungsöffnungen (33, 531) hindurchgeführt werden kann, zu eine Position in welcher sich die zweite Kopplungsöffnung (531) des Sicherungselements (53) nicht in Deckung mit der ersten Kopplungsöffnung (33) des Gehäuses (30) und der Kopplungsaussparung (521) des Aufrollmechanismus (40) befindet und somit die Leine (20) gegen Entkopplung sichert, gebracht werden kann.

9. Leinenvorrichtung (10) für Tiere, aufweisend
ein Gehäuse (30), dazu eingerichtet, von einer Person festgehalten zu werden,
ein Aufrollmechanismus (40), welcher innerhalb des Gehäuses (30) angeordnet ist,
eine Leine (20), dazu konfiguriert mit dem einen Ende mit einem Tier verbunden zu sein und mit dem anderen Ende über einen Kopplungsmechanismus (50) mit dem Aufrollmechanismus (40) der Leinenvorrichtung verbunden zu sein, wobei
der Aufrollmechanismus (40) dazu konfiguriert ist, die Leine (20) aus einem zumindest teilweise ausgerollten Zustand in das Gehäuse (30) aufzurollen und wobei
der Kopplungsmechanismus (50) dazu konfiguriert ist die Leine (20) im vollständig ausgerollten Zustand vom Aufrollmechanismus (40) zu entkoppeln, wobei
der Aufrollmechanismus (40) über eine Trommel (41) verfügt, welche dazu eingerichtet ist auf ihr die Leine (20) aufzurollen, und **dadurch gekennzeichnet, dass**
der Kopplungsmechanismus (50) in Form eines Bügels (22) ausklappbar am Umfang der Trommel (41) ausgebildet ist in der Art, dass der Bügel (22) im eingeklappten Zustand im Umfang der Trommel (41) versenkt ist.

## Claims

1. A leash device (10) for animals, comprising
a housing (30) which is designed to be held by a person,
a retraction mechanism (40) which is arranged inside the housing (30),
a leash (20) which is designed to be connected by one end to an animal and by the other end, via a coupling mechanism (50), to the retraction mechanism (40) of the leash device, wherein
the retraction mechanism (40) is designed to retract the leash (20) into the housing (30) from an at least partially extended state, and wherein
the coupling mechanism (50) is designed to uncouple the leash (20) from the retraction mechanism (40) when the leash is completely extended, and **characterized in that**
the coupling mechanism (50) is arranged translationally moveably within the retraction mechanism (40).

2. The leash device (10) according to claim 1, wherein the retraction mechanism (40) applies a continuous force to the leash (20), which force is designed to retract the leash (20) in the housing (30) and is caused in particular by an elastic element, and/or wherein the retraction mechanism (40) is designed in such a way that it is locked in a state in which the leash (20) is uncoupled from the retraction mechanism (40) and is active in a state in which the leash (20) is connected to the retraction mechanism (40).

3. The leash device (10) according to any one of the preceding claims, wherein the coupling mechanism (50) is formed by a coupling element (21) on the leash and a coupling counterpart (52) on the retraction mechanism (40).

4. The leash device (10) according to the preceding claim, wherein the coupling mechanism (50) is provided by a positive-locking connection.

5. The leash device (10) according to any one of the preceding claims, wherein the leash (20) is designed in the form of a rope at the end at which it is connected to the animal.

6. The leash device (10) according to any one of the preceding claims, wherein the retraction mechanism (40) has a reel (41), which is designed to retract the leash (20) thereon.

7. The leash device (10) according to the preceding claim, wherein the coupling mechanism (50) has an elastic element which is designed to hold the coupling mechanism (50) in a defined position in the retraction mechanism (40).

8. A leash device (10) for animals, comprising
a housing (30) which is designed to be held by a person,
a retraction mechanism (40) which is arranged inside the housing (30),
a leash (20) which is designed to be connected by one end to an animal and by the other end, via a coupling mechanism (50), to the retraction mechanism (40) of the leash device, wherein
the retraction mechanism (40) is designed to retract the leash (20) into the housing (30) from an at least partially extended state, and wherein
the coupling mechanism (50) is designed to uncouple the leash (20) from the retraction mechanism (40) when the leash is completely extended, wherein
wherein the retraction mechanism (40) has a reel (41), which is designed to retract the leash (20) thereon, and
has a first coupling opening (33), which is designed such that the end of the leash (20), which is connected to the retraction mechanism (50), can be guided through the first coupling opening (33), wherein
the retraction mechanism (40) has a coupling recess (521) which is designed to correspond to a coupling element (21) at the end of the leash (20) and into which the coupling element (21) of the leash (20) can be inserted,
**characterized in that**
the coupling mechanism (50) additionally has a securing element (53) such as a securing disc between the drum (41) and the housing (30), wherein the securing element (53) can be moved on the reel (41) and can thus assume various positions, wherein the securing element (53) has a second coupling opening (531), which corresponds to the shape of the first coupling opening (33) located in the housing (30), wherein the securing element (53) can be moved from a position in which the two coupling openings (33, 531) are in alignment and the leash (20) can be guided through the coupling openings (33, 531) accordingly, to a position in which the second coupling opening (531) of the securing element (53) is not in alignment with the first coupling opening (33) of the housing (30) and the coupling recess (521) of the retraction mechanism (40) and thus secures the leash (20) against decoupling.

9. A leash device (10) for animals, comprising
a housing (30) which is designed to be held by a person,
a retraction mechanism (40) which is arranged inside the housing (30), a leash (20) which is designed to be connected by one end to an animal and by the other end, via a coupling mechanism (50), to the retraction mechanism (40) of the leash device, wherein
the retraction mechanism (40) is designed to retract the leash (20) into the housing (30) from an at least partially extended state, and wherein
the coupling mechanism (50) is designed to uncouple the leash (20) from the retraction mechanism (40) when the leash is completely extended, wherein
wherein the retraction mechanism (40) has a reel (41), which is designed to retract the leash (20) thereon, and
**characterized in that,**
the coupling mechanism (50) is designed to be foldable in the form of a bracket (22) on the circumference of the reel (41) in such a way that the bracket (22) is recessed in the circumference of the reel (41) in the folded-in state.

## Revendications

1. Dispositif à laisse (10) pour animaux, présentant
un boîtier (30) conçu pour être maintenu par une personne,
un mécanisme d'enroulement (40) disposé à l'intérieur du boîtier (30), une laisse (20) conçue pour être reliée au niveau d'une extrémité à un animal et pour être reliée au niveau de l'autre extrémité au mécanisme d'enroulement (40) du dispositif à laisse par l'intermédiaire d'un mécanisme d'accouplement (50), dans lequel
le mécanisme d'enroulement (40) est conçu pour enrouler la laisse (20) dans le boîtier (30) à partir d'un état au moins partiellement déroulé, et dans lequel
le mécanisme d'accouplement (50) est conçu pour désaccoupler la laisse (20) du mécanisme d'enroulement (40) à l'état complètement déroulé, et **caractérisé en ce que**
le mécanisme d'accouplement (50) est disposé mobile en translation à l'intérieur du mécanisme d'enroulement (40).

2. Dispositif à laisse (10) selon la revendication 1, dans lequel le mécanisme d'enroulement (40) applique sur la laisse (20) une force permanente conçue pour enrouler la laisse (20) dans le boîtier (30) et provoquée en particulier par un élément élastique et/ou dans lequel le mécanisme d'enroulement (40) est conçu de telle sorte qu'il est bloqué dans un état dans lequel la laisse (20) est désaccouplée du mécanisme d'enroulement (40) et qu'il est actif dans un état dans lequel la laisse (20) est reliée au mécanisme d'enroulement (40).

3. Dispositif à laisse (10) selon l'une des revendications précédentes, dans lequel le mécanisme d'accouplement (50) est formé par un élément d'accouplement (21) sur la laisse et par une contrepartie d'accouplement (52) sur le mécanisme d'enroulement (40).

4. Dispositif à laisse (10) selon la revendication précédente, dans lequel le mécanisme d'accouplement (50) est donné par une liaison par complémentarité de forme.

5. Dispositif à laisse (10) selon l'une des revendications précédentes, dans lequel la laisse (20) est réalisée en forme de corde au niveau de l'extrémité à laquelle elle est reliée à l'animal.

6. Dispositif à laisse (10) selon l'une des revendications précédentes, dans lequel le mécanisme d'enroulement (40) possède un tambour (41) conçu pour enrouler la laisse (20) sur lui.

7. Dispositif à laisse (10) selon l'une des revendications précédentes, dans lequel le mécanisme d'accouplement (50) présente un élément élastique conçu pour maintenir le mécanisme d'accouplement (50) dans une position définie dans le mécanisme d'enroulement (40).

8. Dispositif à laisse (10) pour animaux, présentant
un boîtier (30) conçu pour être maintenu par une personne,
un mécanisme d'enroulement (40) disposé à l'intérieur du boîtier (30),
une laisse (20) conçue pour être reliée au niveau d'une extrémité à un animal et pour être reliée au niveau de l'autre extrémité au mécanisme d'enroulement (40) du dispositif à laisse par l'intermédiaire d'un mécanisme d'accouplement (50), dans lequel
le mécanisme d'enroulement (40) est conçu pour enrouler la laisse (20) dans le boîtier (30) à partir d'un état au moins partiellement déroulé, et dans lequel
le mécanisme d'accouplement (50) est conçu pour désaccoupler la laisse (20) du mécanisme d'enroulement (40) à l'état complètement déroulé, dans lequel
le mécanisme d'enroulement (40) possède un tambour (41) conçu pour enrouler la laisse (20) sur lui, et
dans lequel le boîtier (30) présente une première ouverture d'accouplement (33) conçue pour que l'extrémité de la laisse (20) reliée au mécanisme d'enroulement (50) puisse être passée à travers la première ouverture d'accouplement(33), dans lequel
le mécanisme d'enroulement (40) présente un évidement d'accouplement (521) réalisé en correspondance avec un élément d'accouplement (21) au niveau de l'extrémité de la laisse (20) et dans lequel l'élément d'accouplement (21) de la laisse (20) peut être inséré, **caractérisé en ce que**
le mécanisme d'accouplement (50) présente en outre un élément de sécurité (53) tel qu'une bague de sécurité par exemple entre le tambour (41) et le boîtier (30), dans lequel
l'élément de sécurité (53) peut être déplacé sur le tambour (41) et peut ainsi prendre différentes positions, dans lequel
l'élément de sécurité (53) présente une seconde ouverture d'accouplement (531) correspondant à la forme de la première ouverture d'accouplement (33) située dans le boîtier (30), dans lequel l'élément de sécurité (53) peut être déplacé d'une position dans laquelle les deux ouvertures d'accouplement (33, 531) coïncident et dans laquelle la laisse (20) peut être guidée à travers les ouvertures d'accouplement (33, 531), à une position dans laquelle la seconde ouverture d'accouplement (531) de l'élément de sécurité (53) ne coïncide pas avec la première ouverture d'accouplement (33) du boîtier (30) et l'évidement d'accouplement (521) du mécanisme d'enroulement (40) empêche ainsi le désaccouplement de la laisse (20).

9. Dispositif à laisse (10) pour animaux, présentant
un boîtier (30) conçu pour être maintenu par une personne,
un mécanisme d'enroulement (40) disposé à l'intérieur du boîtier (30),
une laisse (20) conçue pour être reliée au niveau d'une extrémité à un animal et pour être reliée au niveau de l'autre extrémité au mécanisme d'enroulement (40) du dispositif à laisse par l'intermédiaire d'un mécanisme d'accouplement (50), dans lequel
le mécanisme d'enroulement (40) est conçu pour enrouler la laisse (20) dans le boîtier (30) à partir d'un état au moins partiellement déroulé, et dans lequel
le mécanisme d'accouplement (50) est conçu pour désaccoupler la laisse (20) du mécanisme d'enroulement (40) à l'état complètement déroulé, dans lequel
le mécanisme d'enroulement (40) possède un tambour (41) conçu pour enrouler la laisse (20) sur lui, et **caractérisé en ce que**
le mécanisme d'accouplement (50) est réalisé sous la forme d'un étrier (22) dépliable sur la circonférence du tambour (41) de sorte que l'étrier (22) est encastré dans la circonférence du tambour (41) à l'état replié.
